# EUROPEAN PATENT APPLICATION

(11) **EP 4 779 519 A1**
(43) Date of publication of application: **22.07.2026**
(21) Application number: 25152693.5
(22) Date of filing: 17.01.2025
(51) Int. Cl.: G06N 3/045, G06N 3/092, G06N 3/094

(54) **A COMPUTER-IMPLEMENTED METHOD FOR TRAINING AN ARTIFICIAL INTELLIGENCE MODEL**

(71) Applicant: Volvo Car Corporation, 405 31 Göteborg (SE)
(72) Inventor: JI, Qinglei, 40531 Göteborg (SE); HANSSON, Fredrik, 40531 Göteborg (SE)
(74) Representative: Kransell & Wennborg KB

(57) **Abstract**

The disclosure relates to a computer-implemented method for training an artificial intelligence, AI, model (10), the method comprising: causing a first training of the AI model (10) based on data (1) of a first training dataset; causing a training of a reinforcement learning, RL, agent (20) for generating adversary noise data (2) based on input data (4) for the RL agent (20) comprising at least a part of input data (1) for the AI model (10) in the first training dataset; obtaining, by use of the adversary noise data (2) generated by the RL agent (20), a second training dataset, wherein the adversary noise data (2) is generated by the RL agent (20) based on the input data (1) for the AI model (10) in the first training dataset and wherein input data of the second training dataset comprise augmented input data (3) for the AI model (10); and causing a second training of the AI model (10) based on data of the second dataset.

## Description

### TECHNICAL FIELD

The present disclosure relates to a computer-implemented method for training an artificial intelligence model and a method for controlling a vehicle.

### BACKGROUND ART

Artificial intelligence, AI, models have been used widely in autonomous systems to process image data. The AI models are often developed using a supervised learning method, which is one of different machine learning techniques. The supervised learning method requires a large amount of collected data and their respective labelling. Since the labelling is normally done manually by humans, the supervised learning method using this labelling may be time-consuming and cannot cover all real-world scenarios in different applications, specifically in vehicle applications.

Such issues have caused an increased concern regarding robustness and reliability of the AI models in real world environments and safety-critical systems, specifically in vehicle applications, where inputs to the AI models are subject to disturbances, distortions, and even intended attacks, and where the consequences of error performances are critical. Therefore, identifying weaknesses of the AI models, such as inputs that cause the AI models to go wrong, during an early development stage can help improve the robustness of the AI models.

Currently, the common practice to increase the robustness and reliability of the AI models is to collect a large amount of data for training and testing the AI models. Using a large amount of collected data from diverse scenarios can increase the robustness and reliability of the AI models in different environments. However, it is not possible to ensure enough coverage only by data collection, due to the high cost of data collection and data preparation. Therefore, data augmentation is used to improve the coverage. Using data augmentation methods like cropping, resizing, adding random noises can increase the amount of data for training the AI models and make the AI models more resistant to noises, disturbances and distortions.

However, the capabilities of such methods using data augmentation are still limited as the real-world data can be much more complex compared to the training data. For example, the AI models developed in these manners cannot handle adversary noises, which are designed to malfunction the AI models through their weak points but are hard to be detected by human. Accordingly, there is a need for an AI model with increased robustness and reliability to unknown disturbance and intended attacks and reduced cost of training and test data.

### DISCLOSURE OF THE INVENTION

The problem is at least partially solved or alleviated by the subject matter of the independent claims of the present disclosure, wherein further examples are incorporated in the dependent claims.

According to a first aspect, there is provided a computer-implemented method for training an artificial intelligence, AI, model, the method comprising: causing a first training of the AI model based on data of a first training dataset; causing a training of a reinforcement learning, RL, agent for generating adversary noise data based on input data for the RL agent comprising at least a part of input data for the AI model in the first training dataset; obtaining, by use of the adversary noise data generated by the RL agent, a second training dataset, wherein the adversary noise data is generated by the RL agent based on the input data for the AI model in the first training dataset and wherein input data of the second training dataset comprise augmented input data for the AI model; and causing a second training of the AI model based on data of the second dataset.

The AI model may be a program or an algorithm that is to be and/or has been trained on a set of data to perform a specific task, such as recognizing certain patterns or making certain decisions without further human intervention. The AI model may be a model that processes input data and output desired outputs. For example, the AI models may be acquired through supervised learning processes. The training of the AI model may be a process of teaching the AI model to perform the specific task by providing the set of data.

Reinforcement learning is a category of machine learning and does not require explicit information such as labels of the data. The reinforcement learning may comprise an RL agent, which may be an AI model that can be represented by different formats like polynomials, neural networks etc. and observes an environment, and the environment, which may be information on its current state. The information may be understood as an input of the RL agent and the RL agent may output an action. The RL agent may perform actions that can lead to a positive (desired) or negative (undesired) change in the environment. Reinforcement learning may use different algorithms to improve the RL agent to maximize the positive feedback (rewards) from the environment.

The adversary noise data may be data with noise to cause misclassifications. The adversary noise data may be data crafted to cause misclassification to an AI model. The augmented input data may be the input data augmented with the adversary noise data.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to an example, the AI model may be for a vehicle application. For example, the AI model may be adapted for an application in image recognition for autonomous driving of the vehicle. Additionally, or alternatively, the AI model may be trained to perform a task in a vehicle system. The vehicle system may for example comprise the vehicle application, e.g. image recognition for autonomous driving of the vehicle. For example, the AI model may be trained to recognize an environment of the vehicle system such as to read specific road signs. The input data for the AI model may comprise data indicative of a vehicle environment and/or of a detected situation in a vehicle system and/or in the vehicle environment. For example, the input data may comprise images of environment such as streets, on which the vehicle drives. For example, the input data may comprise road signs in the vehicle environment.

According to an example, the task in the vehicle system comprises a pattern recognition task, a decision-making task and/or an automation task. The pattern recognition task may be a task to automatically recognize patterns and regularities in data. For example, the pattern recognition task may be a task to identify a pedestrian crossing a road. The decision-making task may be a task to decide whether an action should be taken or not. For example, the decision-making task may be a task to decide whether to bring a driving vehicle to a stop. The automation task may be a task of making a process or a system operate automatically.

According to an example, the training of the RL agent may comprise: obtaining the input data for the RL agent based on the at least a part of the input data for the AI model in the first training dataset; obtaining, based on the input data for the RL agent, first output data indicative of first predictions of the AI model obtained during the first training of the AI model; obtaining adversary noisy input data by combining the input data for the RL agent and adversary noise data, generated by the RL agent with regard to the input data for the RL agent; causing the AI model to provide second output data indicative of second predictions of the AI model based on the adversary noisy input data; determining whether the second output data and the first output data are indicative of different predictions; and if the second output data and the first output data are indicative of different predictions, providing a positive reward to the RL agent and, if the second output data and the first output data are not indicative of different predictions, providing a negative reward to the RL agent. By providing the positive reward to the RL agent if the second output data and the first output data are indicative of different predictions, the RL agent may be further tuned to output different predictions for the second output data and the first output data. By providing the negative reward to the RL agent if the second output data and the first output data are not indicative of different predictions, the RL agent may be further tuned to output different predictions for the second output data and the first output data.

According to an example, the obtaining of the input data for the RL agent may comprise randomly sampling data from the input data for the AI model in the first training dataset.

According to an example, the first training dataset may comprise the input data for the AI model and corresponding labels for the input data. The labels may be manually given by humans in preparation of the first training data set.

According to an example, the determining of whether the second output data and the first output data are indicative of different predictions may comprise comparing the second predictions and the corresponding labels for the input data for the AI model, wherein the second output data and the first output data may be indicative of different predictions if the second predictions are different from the corresponding labels for the input data for the AI model, and the second output data and the first output data may be not indicative of different predictions if the second predictions are not different from the corresponding labels for the input data for the AI model.

According to an example, the determining of whether the second output data and the first output data are indicative of different predictions may comprise comparing the second predictions and the first predictions, wherein the second output data and the first output data may be indicative of different predictions if the second predictions are different from the first predictions, and the second output data and the first output data may be not indicative of different predictions if the second predictions are not different from the first predictions.

According to an example, the steps of the method may be repeated until a completion of the training of the AI model is indicated.

According to an example, the completion of the training of the AI model may be indicated if: a decreased accuracy of the AI model by testing the adversary inputs generated by the RL agent is smaller than a threshold value; and/or a number of repeating of the steps of the method is greater than a threshold value. The testing may refer to a process where the performance of a fully trained AI model is evaluated on a testing dataset which is different from a training dataset such as the first training dataset.

According to a second aspect, there is provided a method for controlling a vehicle, the method comprising: performing analysis of data indicative of a vehicle environment and/or of a detected situation in the vehicle and/or in a vehicle environment by using an artificial intelligence, AI, model trained by executing the steps of the computer-implemented method of the first aspect.

According to a third aspect, there is provided a data processing apparatus comprising means for carrying out the steps of the method of the first aspect or the second aspect.

According to a fourth aspect, there is provided a computer program comprising instructions, which, when the program is executed by a computer, cause the computer to carry out the steps of the method of the first aspect or the second aspect.

According to a fifth aspect, there is provided a computer readable storage medium comprising instructions which, when executed by a computer, cause the computer to carry out the steps of the method of the first aspect or the second aspect.

According to a sixth aspect, there is provided a vehicle comprising a data processing apparatus of the third aspect, a computer program of the fourth aspect, and/or a computer-readable storage medium of the fifth aspect.

It should be noted that the above examples may be combined with each other irrespective of the aspect involved. Accordingly, the method may be combined with structural features and, likewise, the data processing apparatus, computer program, computer-readable storage medium and the vehicle may be combined with features described above with regard to any one of the methods.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows data flow according to a method of the present disclosure;
- Figure 2: shows an example dataset;
- Figure 3: shows examples of adversary images based on the example dataset;
- Figure 4: shows a training scheme using an RL agent according to an aspect of the present disclosure;
- Figure 5: shows prediction results based on the example dataset according to an aspect of the present disclosure;
- Figure 6: shows example stages of an aspect of the present disclosure; and
- Figures 7a and 7b: show accuracy graphs without and with a reinforcement learning agent according to an aspect of the present disclosure.

### DETAILED DESCRIPTION OF FIGURES

The Figures are merely schematic representations and serve only to illustrate examples of the disclosure. Identical or equivalent elements are in principle provided with the same reference signs.

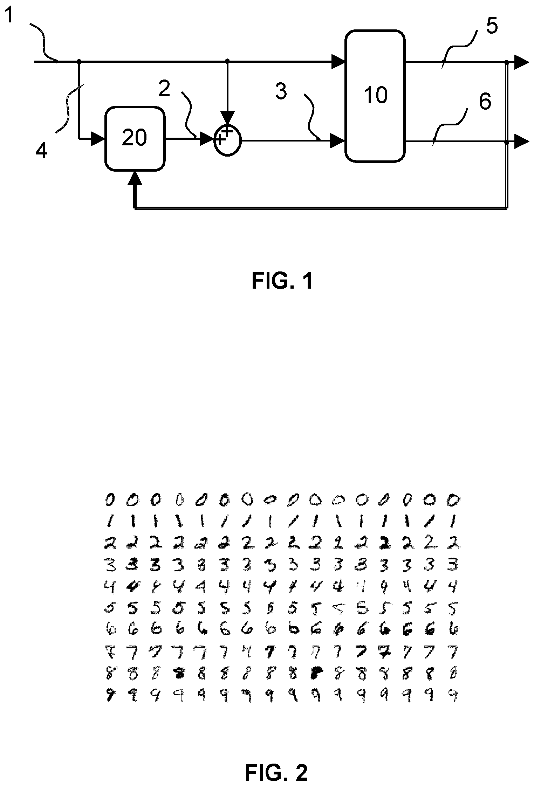

Figure 1 shows data flow according to a method of the present disclosure. The method may be a computer-implemented method for training an artificial intelligence, AI, model 10. The method comprises: causing a first training of the AI model 10 based on data 1 of a first training dataset; causing a training of a reinforcement learning, RL, agent 20 for generating adversary noise data 2 based on input data 4 for the RL agent 20 comprising at least a part of input data 1 for the AI model 10 in the first raining dataset; obtaining, by use of the adversary noise data 2 generated by the RL agent 20, a second training dataset, wherein the adversary noise data 2 is generated by the RL agent 20 based on the input data 1 for the AI model 10 in the first raining dataset and wherein input data of the second training dataset comprise augmented input data 3 for the AI model 10; and causing a second training of the AI model 10 based on data of the second dataset.

The training of the RL agent 20 may comprise: obtaining the input data 4 for the RL agent 20 based on the at least a part of the input data 1 for the AI model 10 in the first training dataset; obtaining, based on the input data 4 for the RL agent 20, first output data 5, indicative of first predictions of the AI model 10 obtained during the first training of the AI model 10; obtaining adversary noisy input data by combining the input data 4 for the RL agent 20 and adversary noise data 2, generated by the RL agent 20 with regard to the input data 4 for the RL agent 20; causing the AI model 10 to provide second output data 6 indicative of second predictions of the AI model 10 based on the adversary noisy input data; determining whether the second output data 6 and the first output data 5 are indicative of different predictions; and if the second output data 6 and the first output data 5 are indicative of different predictions, providing a positive reward to the RL agent 20 and, if the second output data 6 and the first output data 5 are not indicative of different predictions, providing a negative reward to the RL agent 20.

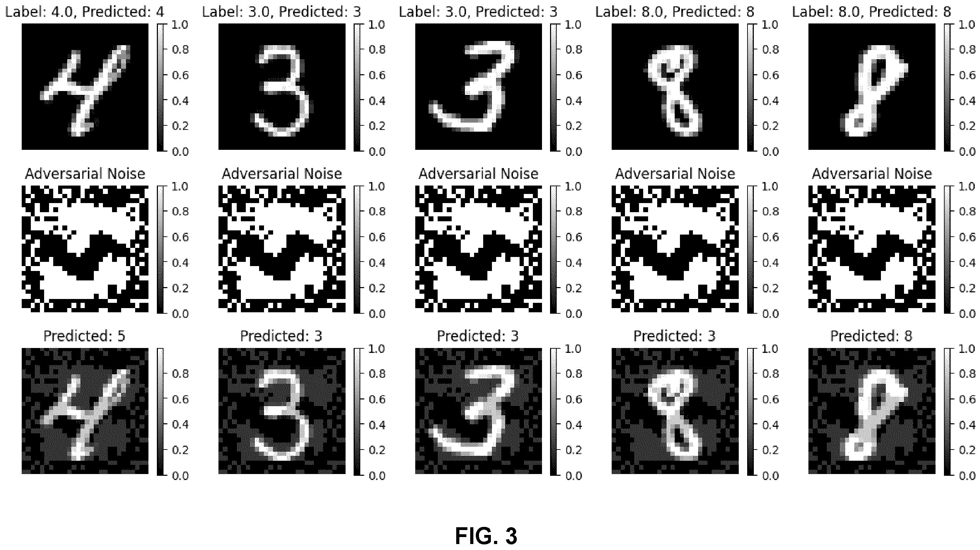

Figure 2 shows an example dataset. For example, the open source MNIST dataset may be used for this illustrative purpose. Figure 3 shows examples of adversary images based on the example dataset. The examples of adversary images shown in Figure 3 may be examples of the augmented input data 3 for the AI model 10.

The MNIST dataset in this example comprises images with labels, which are digits from 0 to 9. The images are gray scale and the size of each image in pixels are 28x28. A classification model may be trained based on the images as inputs to predict respective labels of the images as the outputs. To adversary attack such classification model, an RL agent may be trained to generate adverse images with the same size as the input images, and adverse noises may be then overlaid to the input images and generate distorted images. The method of overlay can be modified freely for different needs. For example, the pixel values of the distorted images may be calculated using 80% of the original input images and 20% of the adverse images. The classification model may then predict outputs using the distorted images. If the prediction of the classification model is wrong, that is, if the prediction is different from the label of the input image, the RL agent 20 may receive a positive reward, otherwise zero or negative reward. In this way, the RL agent can be effectively used in adversary attacks.

Figure 3 shows the examples of adversary images based on the example dataset. The first row is the prediction results of the trained classification model on the input images with high prediction accuracy. The second row shows the adversary images generated by the RL agent for the input images. It is noted that the adversary images are similar to each other although the input images are different, indicating that patterns of the adversary images are dependent on the classification model, rather than the input images. Using the classification model to predict on the distorted images on the third row, the accuracy has been decreased, indicating that the RL agent can malfunction the classification model and the classification model is not resistant to the adversary attacks.

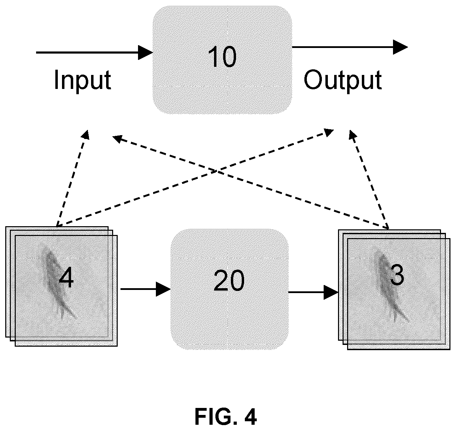

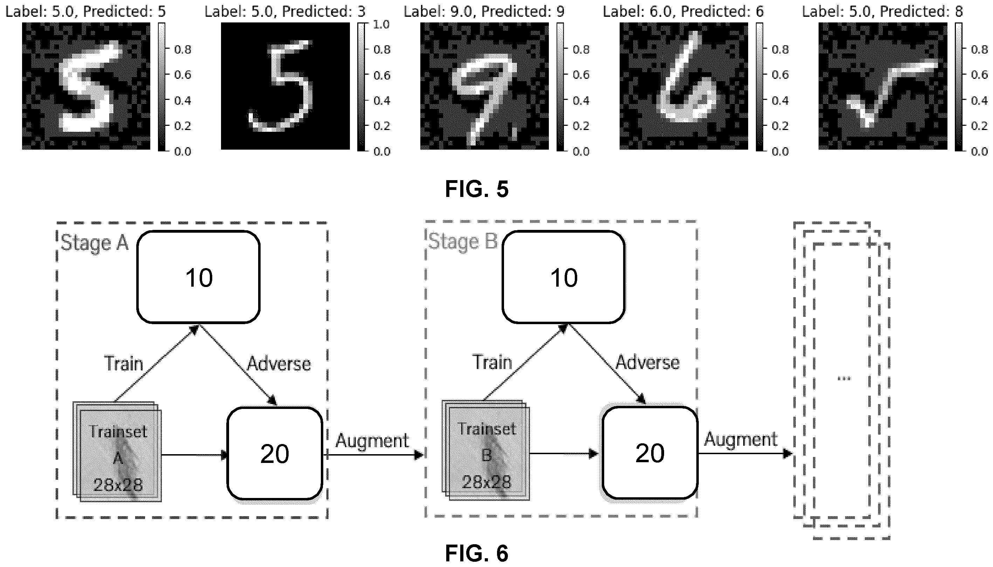

Therefore, according to the present disclosure, to improve the performance of the AI model 10 on the distorted images, the previously explained RL agent 20 is used to process the input data 4, to generate the augmented input data 3, which is a set of distorted images by keeping the original labels in the input data 4 but replacing the corresponding images with the distorted adversarial ones. This new distorted training dataset, the augmented input data 3, is then used to retrain the AI model 10 as illustrated in Figure 4. As a result, the AI model 10 has good performance on both the original input data 4, as well as the augmented input data 3, and the prediction accuracy now increased as shown in Figure 5, which shows prediction results based on the example dataset according to an aspect of the present disclosure. This indicates that the AI model 10 is more robust and is resistant to attacks from the RL agent 20.

Now that the AI model 10 is more robust and resistant to the RL agent 20, a new RL agent 20 can be trained against the AI model 10, and new input data can be generated to further reinforce the AI model 10 by repeating the processes shown in Figure 5. The entire process is shown in Figure 6. Figure 6 shows example stages of an aspect of the present disclosure. In state A, an AI model 10 is trained from a trainset A. The trainset A may refer to the input data 1 and/or the input data 4. The trainset B in state B may be understood correspondingly, and the RL agent 20 is trained to adverse the AI model 10 by interacting with it and generate distorted images to decrease its prediction accuracy. The developed RL agent 20 is then used to process the trainset A and generate augmented trainset B. How to formulate the trainset B from the trainset A and the distorted data A' can be dependent on the use case. For example, B can be a stack of A and A', or randomly sampled from A and A' to keep the same size of the trainsets A and B. With the new trainset B, the training-adverse-augment process can be repeated until convergence of the classification model parameters, or it is determined from developers to stop the process.

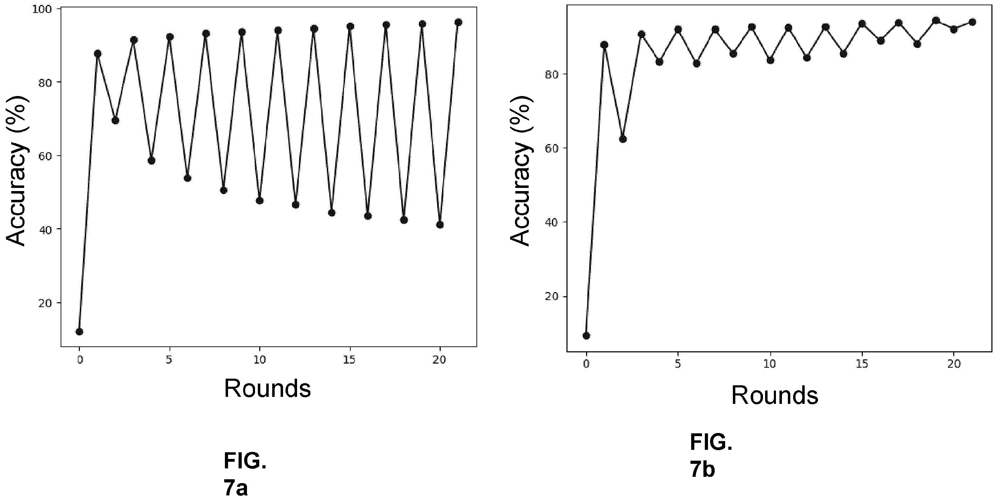

Figures 7a and 7b shows varying of accuracies of the AI model in 10 rounds of training and attacking. The accuracy of round 0 is the original accuracy of the AI model 10 without any training. The odd-numbered rounds, such as 1, 3, and 5, refer to model accuracies after the training or re-training. The even-numbered rounds, such as 2, 4 and 6, refer to accuracies on the augmented data generated by the RL agent 20. While Figure 7a refers to a case where there is no learning from attacks, that is, where the RL agent 20 is not included in learning, Figure 7b refers to a case according to an aspect of the present disclosure, where learning from adversary attacks is included. It can be concluded that, with the RL agent 20, the accuracy after training gradually increases and stabilizes, and the drop of the accuracies due to the adversary stacks becomes smaller and smaller. This shows that the AI model 10 is more robust to the adversary attacks from the RL agent 20.

In other words, the present disclosure proposes a method to use the RL agent 20 to adversely attack the AI model 10 and identify the weaknesses of the AI model 10. The RL agent 20 can then generate augmented data to increase the robustness of the AI model 10 by re-training. The process can be easily repeated to improve the AI model 10 until convergence or satisfaction. This method has high flexibility to different AI models, as the RL agent 20 can be defined for different preferences. The present disclosure is especially important for autonomous driving and/or advanced driver assistance system functions where AI techniques are greatly applied, as the method according to the present disclosure is cost-effective and provides guidance to developing robust AI models. The same methodology can be applied not only to a classification model but also to other AI models such as an object detection model.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 1: input data
- 2: adversary noise data
- 3: augmented input data
- 4: input data
- 5: first output data
- 6: second output data
- 10: AI model
- 20: RL agent

## Claims

1. A computer-implemented method for training an artificial intelligence, AI, model (10), the method comprising:
- causing a first training of the AI model (10) based on data (1) of a first training dataset;
- causing a training of a reinforcement learning, RL, agent (20) for generating adversary noise data (2) based on input data (4) for the RL agent (20) comprising at least a part of input data (1) for the AI model (10) in the first training dataset;
- obtaining, by use of the adversary noise data (2) generated by the RL agent (20), a second training dataset, wherein the adversary noise data (2) is generated by the RL agent (20) based on the input data (1) for the AI model (10) in the first training dataset and wherein input data of the second training dataset comprise augmented input data (3) for the AI model (10); and
- causing a second training of the AI model (10) based on data of the second dataset.

2. The computer-implemented method of claim 1, wherein:
- the AI model (10) is for a vehicle application; and/or
- the AI model (10) is trained to perform a task in a vehicle system; and/or
- the input data (1) for the AI model (10) comprises data indicative of a vehicle environment and/or of a detected situation in a vehicle system and/or in the vehicle environment.

3. The computer-implemented method of claim 2, wherein the AI model (10) is trained to perform the task in the vehicle system and the task in the vehicle system comprises a pattern recognition task, a decision-making task and/or an automation task.

4. The computer-implemented method of any one of the preceding claims, wherein the training of the reinforcement learning, RL, agent (20) comprises:
- obtaining the input data (4) for the RL agent (20) based on the at least a part of the input data (1) for the AI model (10) in the first training dataset;
- obtaining, based on the input data (4) for the RL agent (20), first output data (5) indicative of first predictions of the AI model (10) obtained during the first training of the AI model (10);
- obtaining adversary noisy input data by combining the input data (4) for the RL agent (20) and adversary noise data (2), generated by the RL agent (20) with regard to the input data (4) for the RL agent (20);
- causing the AI model (10) to provide second output data (6) indicative of second predictions of the AI model (10) based on the adversary noisy input data;
- determining whether the second output data (6) and the first output data (5) are indicative of different predictions; and
- if the second output data (6) and the first output data (5) are indicative of different predictions, providing a positive reward to the RL agent (20) and, if the second output data (6) and the first output data (5) are not indicative of different predictions, providing a negative reward to the RL agent (20).

5. The computer-implemented method of claim 4, wherein the method comprises the obtaining of the input data (4) for the RL agent (20) comprises randomly sampling data from the input data (1) for the AI model (10) in the first training dataset.

6. The computer-implemented method of any one of the preceding claims, wherein the first training dataset comprises the input data (1) for the AI model (10) and corresponding labels for the input data (1).

7. The computer-implemented method of claim 4 and 6, wherein the determining of whether the second output data (6) and the first output data (5) are indicative of different predictions comprises comparing the second predictions and the corresponding labels for the input data (1) for the AI model (10), wherein the second output data (6) and the first output data (5) are indicative of different predictions if the second predictions are different from the corresponding labels for the input data (1) for the AI model (10), and the second output data (6) and the first output data (5) are not indicative of different predictions if the second predictions are not different from the corresponding labels for the input data (1) for the AI model (10).

8. The computer-implemented method of any one of the claims 4 to 6, wherein the determining of whether the second output data (6) and the first output data (5) are indicative of different predictions comprises comparing the second predictions and the first predictions, wherein the second output data (6) and the first output data (5) are indicative of different predictions if the second predictions are different from the first predictions, and the second output data (6) and the first output data (5) are not indicative of different predictions if the second predictions are not different from the first predictions.

9. The computer-implemented method of any one of the preceding claims, wherein the steps of the method are repeated until a completion of the training of the AI model (10) is indicated.

10. The computer-implemented method of claim 9, wherein the completion of the training of the AI model (10) is indicated if:
a decreased accuracy of the AI model (10) by testing the adversary inputs generated by the RL agent (20) is smaller than a threshold value;
a number of the repeating of the steps of the method is greater than a threshold value.

11. A method for controlling a vehicle, the method comprising:
- performing analysis of data indicative of a vehicle environment and/or of a detected situation in the vehicle and/or in a vehicle environment by using an artificial intelligence, AI, model (10) trained by executing the steps of the computer-implemented method according to any one of the preceding claims 1 to 10; and
- causing adjustment of at least one driving parameter of the vehicle based on data indicating output of the AI model (10).

12. A data processing apparatus comprising means for carrying out the steps of the method of any one of the preceding claims.

13. A computer program comprising instructions, which, when the program is executed by a computer, cause the computer to carry out the steps of the method of any one of the preceding claims 1 to 11.

14. A computer-readable storage medium comprising instructions which, when executed by a computer, cause the computer to carry out the steps of the method of any one of the preceding claims 1 to 11.

15. A vehicle comprising the data processing apparatus of claim 12.
